# EUROPEAN PATENT SPECIFICATION

(11) **EP 2 954 974 B1**
(45) Date of publication and mention of the grant of the patent: **14.09.2016**
(21) Application number: 13723529.7
(22) Date of filing: 08.02.2013
(51) Int. Cl.: B23Q 1/01, B23B 29/034, B23Q 1/62, B23Q 3/12

(54) **BORING MACHINE**
BOHRMASCHINE
ALÉSEUSE

(43) Date of publication of application: 16.12.2015
(73) Proprietor: Bostek Innovation S.L.U., 20159 Asteasu (Gipuzkoa) (ES)
(72) Inventor: DRAVASA GURRUCHAGA, Juan José, E-20159 Asteasu Guipuzcoa (ES)
(74) Representative: Balder IP Law, S.L.
(86) International application number: PCT/ES2013/070075
(87) International publication number: WO 2014/122333

(56) References cited:
- EP-A1- 2 228 169
- WO-A1-03/035309
- DE-U1- 8 403 099
- DE-U1- 9 307 758
- US-A1- 2004 240 953

## Description

### TECHNICAL FIELD

The invention falls within the field of boring machines.

### BACKGROUND OF THE INVENTION

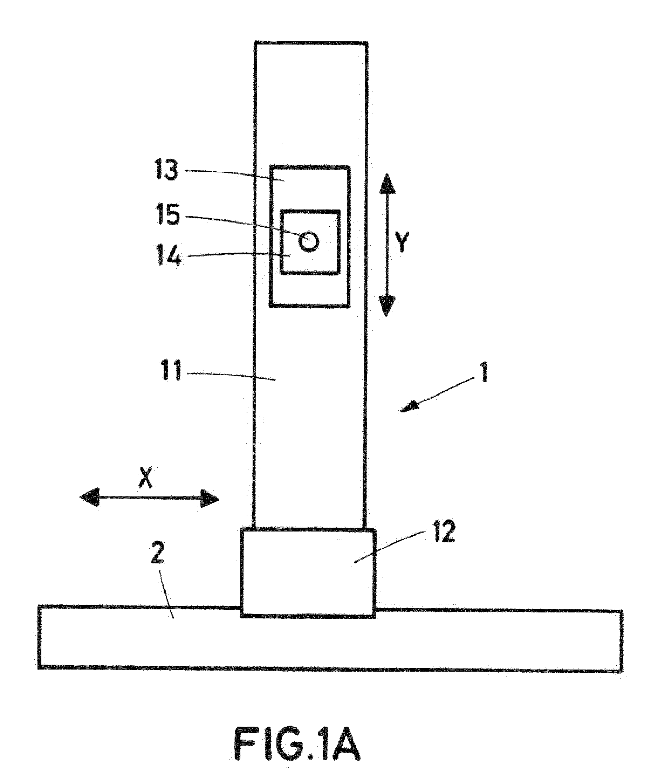

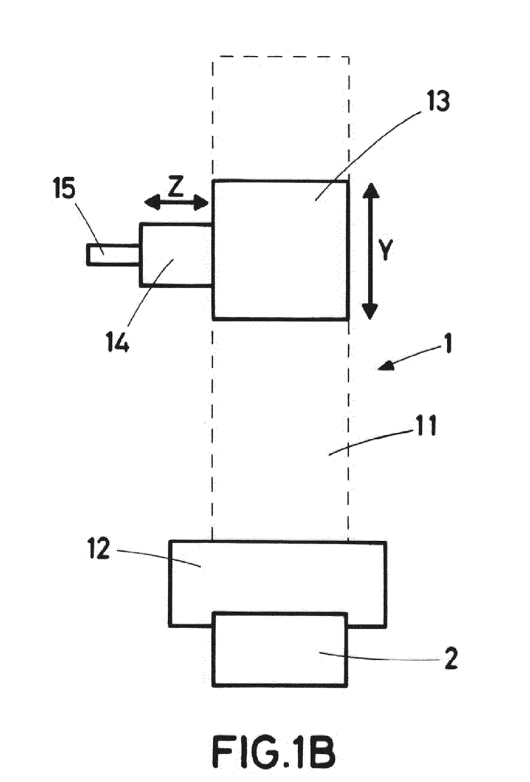

Figures 1A and 1B represent a conventional boring machine 1, which comprises a column or structure 11 mounted on a base 12, which in turn is mounted on a horizontal guide-support 2 mounted on the floor. The boring machine 1 is moveable along said guide-support 2, according to a horizontal axis X. This degree of freedom is conventionally used so that the machine remains adequately positioned to face the part that is going to be subjected to a machining process.

The boring machine further comprises a carriage 13 provided with the ram 14 and the bar 15. The bar 15 is a rod configured to rotate with respect to the ram 14.

As it has been illustrated in a schematic manner in figures 1A and 1B, the carriage 13, which is moveable along the axis X together with the column 11 and the rest of the boring machine 11, is also moveable vertically along the structure 11, according to the axis Y, a movement that allows placing the ram 14 and the bar 15 at the appropriate height for machining the piece.

On the other hand, the ram 14 is a type of plunger or arm that enters and exits with regard to the carriage 13, generally activated by a spindle (not illustrated in figures 1A and 1B), to approach the bar 15, which carries the tool (not illustrated in figures 1A and 1B) to the part to be machined. That is to say, the ram is moveable according to a horizontal axis Z, perpendicular to the previously mentioned axis X. Also, the bar 15 can be moveable according to this said horizontal axis Z, with regard to the ram; that is to say, the bar 15 can be axially moveable with regard to the ram. On the other hand, the bar is associated to actuating means that cause the bar to rotate with regard to the ram, in order to make the tool mounted in the end of the bar to rotate. The boring machine includes actuating and control means to produce these movements according to the X, Y and Z axes, in a controlled way. This type of boring machine is widely known and it is not necessary to describe in more detail the existing options as far as control and movement generation are concerned. Since the described movements allow moving the bar with the tool according to the three orthogonal X, Y and axis Z, the object to be machined can be placed on a fixed or rotating platform.

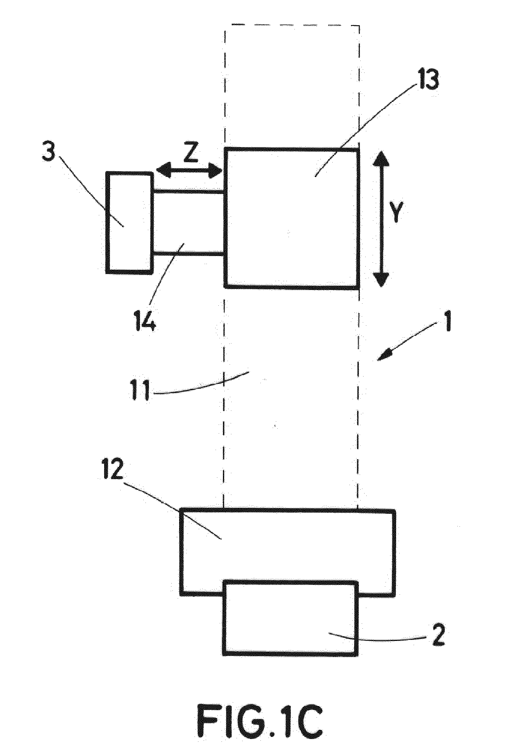

It is known in the state of the art to enlarge the range of operations that the boring machines can perform, attaching an auxiliary head to the ram. For instance, US-2004/0240953-A1 describes a facing head that can be fastened to the spindle of a boring machine. Figure 1C schematically shows a head 3 coupled to the ram, 14 of the boring machine 1 of Figures 1A and 1B.

Although the coupling of a head, such as a facing head, to the ram of a boring machine has been considered a good solution to the problem of increasing the utility of the boring machines and thus maximizing the use of this type of machines, it is considered that the solution is not always ideal, given that these heads may be very large and heavy. For instance, there are heads for performing a horizontal lathing on large diameter parts, for example, of 5 meters in diameter, and the use of heads of, for instance 3 meters or more in diameter or length is frequent. Logically, these heads are often very heavy. This implies that the ram must be designed to support these strains, as otherwise it may suffer damages.

DE-9307758-U1 discloses a boring machine comprising a structure moveable in the horizontal direction according to a first horizontal axis, a carriage mounted on said structure and vertically moveable according to a vertical axis, a ram mounted in said carriage and moveable with respect to said carriage according to a second horizontal axis perpendicular to said first horizontal axis, and a bar mounted in a rotary manner in said ram.

### DESCRIPTION OF THE INVENTION

A first aspect of the invention relates to a boring machine comprising a structure, for instance, a frame or column, horizontally moveable according to a first horizontal axis, a carriage mounted on said structure and vertically moveable according to a vertical axis, a ram, that is, basically, an arm or plunger, mounted in said carriage and moveable with respect to said carriage according to a second horizontal axis, perpendicular to said first horizontal axis, and a bar rotationally mounted in said ram. The ram and the carriage may be moveable according to the corresponding axis by means of any movement mechanism, including, for instance, one or various spindles. This type of structure is conventional in the boring machines field.

According to the invention, the carriage is provided with coupling means for coupling a head, such as an auxiliary head, for instance, a facing head, to the carriage. In this way, the head can be attached to the carriage instead of attaching it to the ram, thus reducing or avoiding loads on the ram. In this way, instead of coupling the head to the ram, it can be directly coupled to the carriage, in such a way that a very rigid head is achieved, firmly attached to the carriage and without the ram suffering strains due to the weight of the head and due to its interaction with the part to be machined during the machining. The head may be very heavy in weight, for instance, exceeding 2500 kg.

The coupling means comprise mechanical coupling means. That is to say, the head may be coupled to the ram by means of some type of mechanical attachment, including for instance, bolts, hooks, clamps, etc. The mechanical coupling means comprise at least one coupling element configured to selectively adopt a first state and a second state, in such a way that if a head is coupled to the carriage, when the coupling element is in said second state, the coupling element prevents the removal of the head from the carriage, and when the coupling element is in said first state, it does not prevent the removal of the head from the carriage. In this way, acting upon the coupling elements, for example, hydraulically, pneumatically and/or electrically, the head can be attached to the carriage or the head can be released from the carriage, respectively. In some embodiments of the invention, said coupling element is hydraulically actuated to pass from said first state to said second state and vice-versa. For example, the coupling element may be a hydraulic clamp or similar, for instance, a clamp that can fit into a hole of the head to then be hydraulically expanded in order to attach the head to the carriage.

In some embodiments of the invention, the carriage of the boring machine comprises at least four of said coupling elements, for instance, distributed in correspondence with four sides of a face or wall of the carriage.

In some embodiments of the invention, the carriage comprises centring means configured to interact with the head for a correct positioning or auto-centring of the head with respect to the carriage when the head is coupled to the carriage. It can for example, be centring bolts with an at least partially bevelled surface and/or truncated cone, which interact with corresponding means on the head, or vice-versa.

In some embodiments of the invention, said coupling methods comprise at least one hydraulic connection to facilitate a transmission of fluid between the carriage and the head, for instance, to supply taladrine to the head.

In some embodiments of the invention, said coupling means comprise at least one electric connection for the transmission of power and/or electric signals between the carriage and the head, for instance, to facilitate the energy necessary so that the head can operate, as well as for controlling the operation of the head.

In some embodiments of the invention, said coupling means are not located in the ram. That is to say, the head can be coupled directly to the carriage. Optionally, the ram may as well comprise the coupling means of a head.

In some embodiments of the invention, said coupling means are located in a wall of the carriage, which comprises a hole through which the ram comes out of the carriage, that is to say, in what is usually considered as the frontal wall of the carriage.

Another aspect of the invention relates to a machining system comprising a boring machine according to what has been previously described, and a support for supporting a part to be machined, said support being horizontally moveable according to said second horizontal axis. Given that the head is coupled to the carriage, the ram of the boring machine is not used, but rather is hidden and inactive inside the carriage. Therefore, the ram can no longer be used to move the tool or head according to the second horizontal axis. In order to facilitate a relative movement between the part to be machined and the head, the part can be placed on a moveable support or carriage, which can move with respect to the boring machine according to said horizontal axis Z.

Another aspect of the invention relates to a machining head, configured to be coupled to the carriage of a boring machine, such as the one described above. That is to say, the head may comprise coupling means, supplementary to those that have been previously described, so it can be incorporated to the boring machine, coupling itself to the carriage rather than to the ram. In some embodiments of the invention, the head is a facing head. This type of head may be very large, and could be extremely advantageous to avoid that the weight must be supported by the ram. The boring machine according to the invention allows this type of head to be directly incorporated to the carriage, being attached to the carriage by the mechanical coupling means, including the hydraulic clamps, for instance. This may be especially advantageous in the case of heavy heads, that may measure many meters long and weigh hundreds or thousands of kg, for example, more than 2500 kg.

Another aspect of the invention relates to a method for coupling a head, for example, an auxiliary facing head, to a boring machine such as the one described above. According to this aspect of the invention, the head is coupled to the carriage rather than to the ram.

### BRIEF DESCRIPTION OF THE DRAWINGS

To complement the description and with the aim of achieving a better comprehension of the features of the invention, according to one practical embodiment thereof, attached as an integral part of the description there is a set of figures wherein by way of non-limitative example, the following has been represented:
Figures 1A and 1B are an elevational and profile schematic view, respectively, of a boring machine according to the state of the art.
Figure 1C is a schematic profile view of the boring machine of Figure 1B, with an auxiliary head coupled to the ram, according to the state of the art.
Figure 2 is a schematic profile view of a boring machine according to one embodiment of the invention, with an auxiliary head coupled to the carriage. The elements that this embodiment of the invention has in common with the state of the art bear the same numerical references.
Figure 3 is a perspective view of a boring machine according to said embodiment of the invention.
Figure 4 is a perspective view of the carriage of the boring machine according to this embodiment of the invention.
Figure 5 schematically shows a cross-section of the configuration of the mechanical coupling means of the head to the carriage.
Figure 6 is a perspective view of the carriage of the boring machine according to this embodiment of the invention, with a facing head mounted in the carriage.
Figure 7 is a schematic perspective view of the system according to this first embodiment of the invention.

### DESCRIPTION OF AN EMBODIMENT OF THE INVENTION

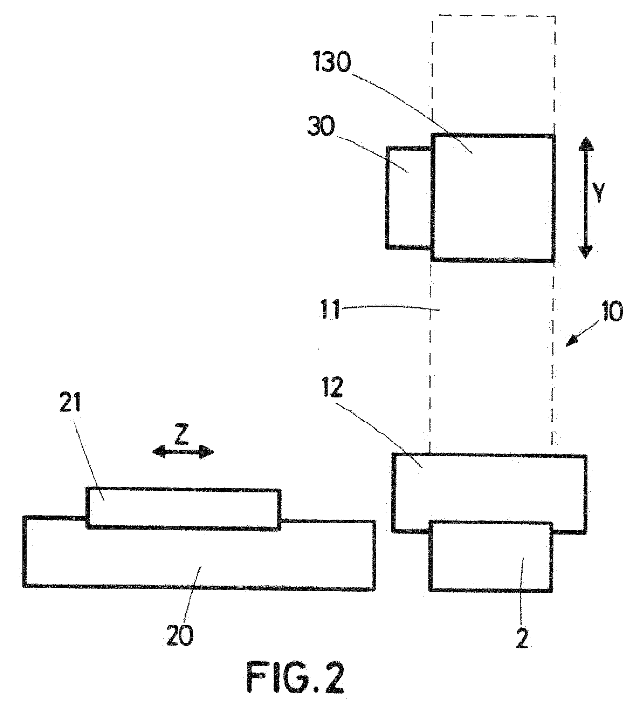

As it can be seen in figure 2, the boring machine 10 comprises, as is conventional, a vertical column or structure 11, which can be horizontally displaced on a guide-support 2 according to a first horizontal axis X, and a vertically moveable carriage according to the vertical axis Y. However, instead of the conventional carriage that the state of the art contemplates, according to the invention, the carriage 130 is provided with coupling means that allow for the coupling of a head 30, such as a facing head, directly to the carriage 130, rather than to the ram. That is to say, the ram and the bar may remain removed inside the carriage, and the head 30 is directly coupled to the carriage 130, for instance, as shown schematically in Figure 2, on a frontal face of the carriage 130.

Given that the head 30 is coupled to the carriage 130 rather than to the ram, it lacks movement capacity according to the horizontal axis Z. Therefore, according to this embodiment of the invention, a moveable support 21 on the guide-support 20 is foreseen, according to said second horizontal axis Z. The part to be machined can be placed on said support 21, and move with the support according to said second horizontal axis Z, that is to say, coming closer to or moving further away from the head 30 and from the boring machine. In this way, it is arranged with these three degrees of freedom, according to X, Y and Z, axes even though the head 30 is directly coupled to the carriage 130. In some embodiments of the invention, the support 21 may be rotary.

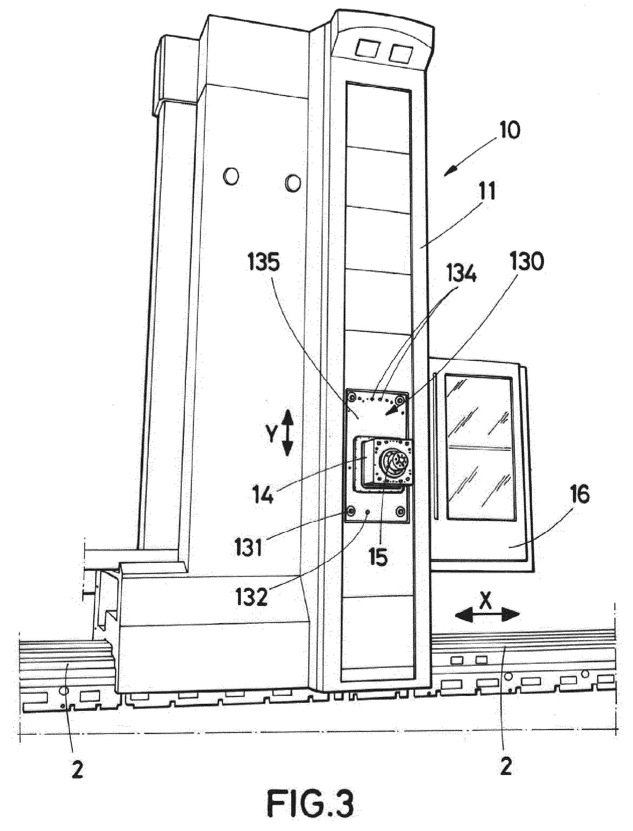

Figure 3 schematically shows a boring machine according to this embodiment of the invention, without the head. It can be observed how the frame, column or structure 11 is mounted on the guide-support 2, formed by parallel rails, to move along said rails, according to said first horizontal axis X. The boring machine includes a cabin 16 for an operator of the boring machine. The carriage 130 is vertically moveable in the structure 11 according to the axis Y, and it can be seen how the ram 14 and the bar 15 protrude with respect to the frontal face 135 of the carriage. The ram 14 is provided with means for coupling a head to the ram, as is conventional. However, additionally, in the boring machine, according to the invention, also the carriage 130 itself, is provided with coupling means for its coupling to a head, on the frontal face 135 of the carriage, that is to say, on the face from which the ram 14 comes out.

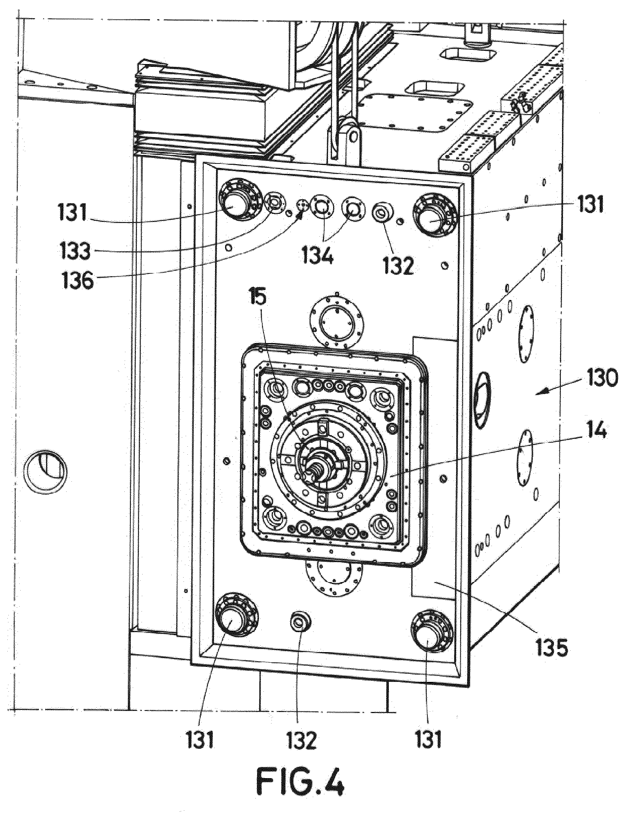

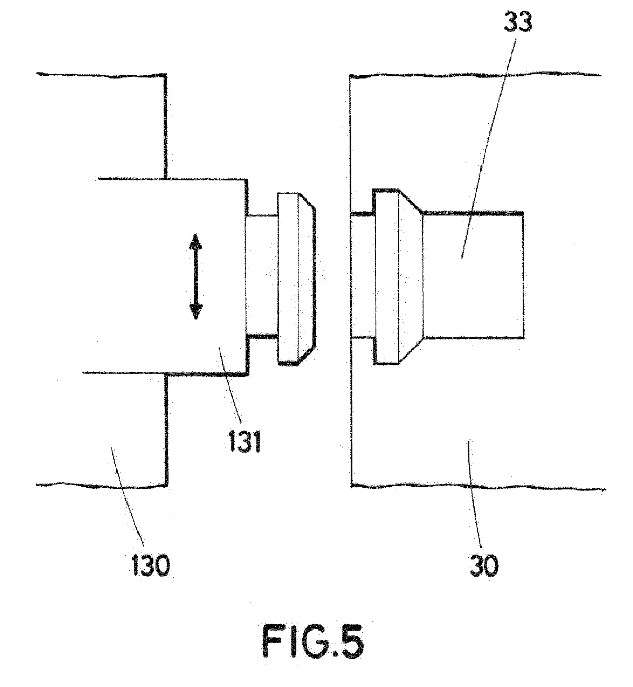

These coupling means can be better seen in Figure 4. In this embodiment of the invention, the coupling means comprise four mechanical coupling elements, in the form of hydraulic clamps that can be inserted into corresponding holes in the head, to then be expanded in such a way that the head is attached to the carriage 130. This is schematically shown in figure 5, wherein a cross-section of the carriage 130 and of the head 30 can be observed. The head comprises four holes 33, one of which is shown in figure 5. The hydraulic clamps 131 of the carriage 130 can be inserted into the holes 33 of the head, when they are in a first state, and then they can be hydraulically actuated to increase their diameter and adopt a second state in which they cannot be removed from said holes 33, in such a way that the head 30 remains firmly attached to the carriage. This type of hydraulic clamps is very well known and it is not necessary to describe them in more detail. Logically, instead of hydraulic clamps, other mechanical coupling means could be used preferably means that can be actuated hydraulically, pneumatically and/or electrically.

In figure 4, it can be observed how the carriage also comprises two centring bolts 132, a hydraulic connection 133 to supply fluid, such as taladrine, to the head from the carriage, and an electric connection 134 that is used to electrically connect the carriage and the head together, for the supply of electric power and/or the transmission of control signals. All these elements are located in the frontal face 135 of the carriage 130. In said frontal face, there is also a detector 136 intended for detecting when the head is correctly coupled to the carriage 130. As shown in figure 4, the ram 14 and the bar 15 are in a drawn-back position, and the carriage is ready to receive the head.

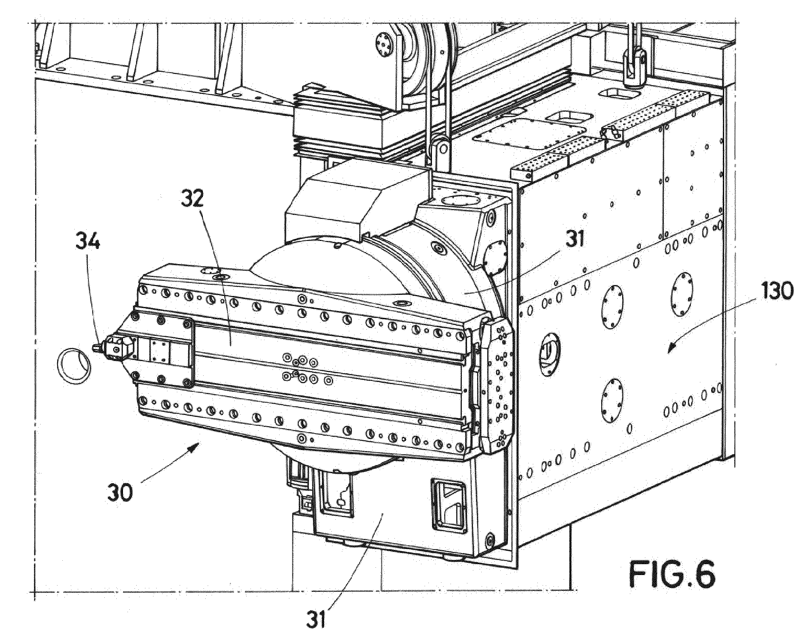

In figure 6, it can be observed how a facing head 30 has been mounted in the carriage 130, a facing head that comprises a head 32 portion, strictly speaking, which may be very similar or even identical to a head intended to be placed on a ram, and an adaptable 31 portion, which is the portion being coupled to the carriage 130. In this way, existing conventional heads can be adapted for coupling them to the carriage instead of to the ram, and thus avoiding subjecting the ram to high strains. However, in other embodiments of the invention, the head itself could have been specifically designed to be coupled directly to the carriage. Figure 6 illustrates in a schematic manner how the head includes a tool 34.

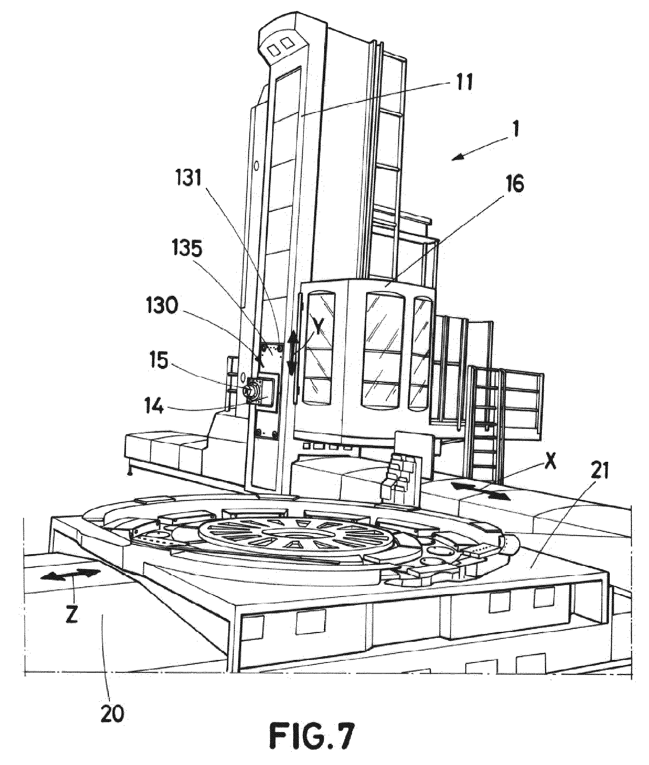

In figure 7, it is illustrated in a schematic manner, the boring machine 1 such as the one described above, horizontally moveable according to the first horizontal axis X and with the carriage moveable according to the vertical axis Y. As described with regard to Figure 2, the part to be machined can be placed on a support 21, which is moveable on a guide-support 20, according to said second horizontal axis Z.

With the invention, therefore, a direct and firm attachment can be achieved between the head and the carriage, avoiding the risk of overloading the ram, and without preventing the relative movement between the part and the head according to the second horizontal axis Z.

In this text, the word "comprises" and its variants (such as "comprising", etc.) must not be interpreted in an exclusive manner, that is, they do not exclude the possibility that what has been described can include other elements, steps etc.

On the other hand, the invention is not limited to the specific embodiments that have been described but rather it also includes, for instance, the variants that can be carried out by a person having an ordinary skill in the art (for example, with regard to the choice of materials, dimensions, components, configuration, etc.), within what is inferred from the claims.

## Claims

1. A boring machine comprising a structure (11) moveable in the horizontal direction according to a first horizontal axis (X), a carriage (130) mounted on said structure (11) and vertically moveable according to a vertical axis (Y), a ram (14) mounted in said carriage (130) and moveable with respect to said carriage (130) according to a second horizontal axis (Z) perpendicular to said first horizontal axis (X), and a bar (15) mounted in a rotary manner in said ram (14)
**characterised in that**
the carriage (130) is provided with coupling means for coupling a head to the carriage (130), said coupling means comprising mechanical coupling means comprising at least one coupling element (131) configured to selectively adopt a first state and a second state, in such a way that if a head is coupled to the carriage, when the coupling element is in said second state the coupling element prevents the removal of the head from the carriage, and when the coupling element is in said first state, it does not prevent the removal of the head from the carriage.

2. The boring machine according to claim 1, wherein said coupling element (131) is hydraulically actuated to pass from said first state to said second state, and vice-versa.

3. The boring machine according to any of the claims 1 and 2, wherein the carriage (130) comprises at least four of said coupling elements (131).

4. The boring machine according to any of the previous claims, wherein the carriage comprises centring means (132) configured to interact with the head for the correct positioning of the head with respect to the carriage when the head is coupled to the carriage.

5. The boring machine according to any of the previous claims, wherein said coupling means comprise at least one hydraulic connection (132) to facilitate a transmission of fluid between the carriage (130) and the head.

6. The boring machine according to any of the previous claims, wherein said coupling means comprise at least one electrical connection (134) for the transmission of electric power and/or electrical signals between the carriage (130) and the head.

7. The boring machine according to any of the previous claims, wherein said coupling means are not located in the ram.

8. The boring machine according to any of the previous claims, wherein said coupling means are located in a wall of the carriage (130), which comprises a hole through which the ram exits the carriage (130).

9. A machining system comprising a boring machine according to any of the previous claims, and a support (21) for supporting a part to be machined, said support (21) being horizontally moveable according to said second horizontal axis (Z).

10. A machining system comprising a boring machine according to any of claims 1-8, and a machining head (30) configured to be coupled to the carriage (130).

11. The machining system according to claim 10, said head (30) being a facing head.

12. The machining system according to any of the claims 10 and 11, said head having a weight exceeding 2500 kg.

13. A method for coupling a head to a boring machine according to any of claims 1 - 8, **characterised in that** the head (30) is coupled to the carriage (130).

14. The method according to claim 13, wherein the head (30) is coupled to the carriage (130) using mechanical coupling means comprising at least one coupling element (131) configured to selectively adopt a first state and a second state, in such a way that if a head is coupled to the carriage, when the coupling element is in said second state the coupling element prevents the removal of the head from the carriage, and when the coupling element is in said first state, it does not prevent the removal of the head from the carriage.

15. The method according to claim 14, wherein said coupling element (131) is hydraulically actuated to pass from said first state to said second state, and vice-versa.

## Patentansprüche

1. Eine Bohrmaschine, umfassend eine Struktur (11), die in der horizontalen Richtung entlang einer ersten horizontalen Achse (X) beweglich ist, einen Schlitten (130), der auf jener Struktur (11) montiert ist und vertikal entlang einer vertikalen Achse (Y) beweglich ist, eine Raume (14), die in jenem Schlitten (130) montiert ist und im Bezug auf jenen Schlitten (130) entlang einer zweiten horizontalen Achse (Z) senkrecht zu jener ersten horizontalen Achse (X) beweglich ist, und ein Stab (15), der in einer rotierenden Weise in jener Ramme (14) montiert ist
dadurch charakterisiert, dass
der Schlitten (130) bereitgestellt wird mit Kopplungs-Mittel zur Kopplung eines Kopfes an den Schlitten (130), wobei jene Kopplungs-Mittel mechanische Kopplungs-Mittel umfassen, die mindestens ein Kopplungs-Element (131) umfassen, das gestaltet ist, um selektiv einen ersten Zustand und einen zweiten Zustand anzunehmen, sodass, falls ein Kopf an den Schlitten gekoppelt ist, wenn das Kopplungs-Element in jenem zweiten Zustand ist, das Kopplungs-Element das Entfernen des Kopfs von dem Schlitten verhindert, und wenn das Kopplungs-Element in jenen ersten Zustand ist, es das Entfernen des Kopfes von dem Schlitten nicht verhindert.

2. Die Bohrmaschine gemäß Anspruch 1, wobei jenes Kopplungs-Element (131) hydraulisch gesteuert wird, um von jenem ersten Zustand in jenen zweiten Zustand überzugehen, und umgekehrt.

3. Die Bohrmaschine gemäß einem der Ansprüche 1 oder 2, wobei der Schlitten (130) mindestens vier jener Kopplungs-Elemente (131) umfasst.

4. Die Bohrmaschine gemäß einem der vorherigen Anspruche, wobei der Schlitten Zentrierungs-Mittel (132) umfasst, die gestaltet sind, mit dem Kopf zur korrekten Positionierung des Kopfes im Bezug auf den Schlitten zusammenzuwirken, wenn der Kopf an den Schlitten gekoppelt ist.

5. Die Bohrmaschine gemäß einem der vorhergehenden Ansprüche, wobei jene Kopplungs-Mittel mindestens eine hydraulisch Verbindung (132) umfassen, um die Übertragung von Flüssigkeit zwischen dem Schlitten (130) und dem Kopf zu ermöglichen.

6. Die Bohrmaschine gemäß einem der vorergehenden Ansprüche, wobei jene Kopplungs-Mittel mindestens eine elektrische Verbindung (134) zur Übertragung elektrischer Leistung und/oder elektrischer Signale zwischen dem Schlitten (130) und dem Kopf umfassen.

7. Die Bohrmaschine gemäß einem der vorhergehenden Ansprüche, wobei jene Kopplungs-Mittel sich nicht in der Ramme befinden.

8. Die Bohrmaschine gemäß einem der vorhergehenden Ansprüche, wobei jene Kopplungs-Mittel sich in einer Wand des Schlittens (130) befinden, die ein Loch umfasst, durch das die Ramme den Schlitten (130) verlässt.

9. Ein Bearbeitungssystem, umfassend eine Bohrmaschine gemäß einem der vorhergehenden Ansprüche und einen Träger (21) zum Stützen eines zu bearbeitenden Teils, wobei jener Träger (21) horizontal entlang jener zweiten horizontalen Achse (Z) beweglich ist.

10. Ein Bearbeitungssystem, umfassend eine Bohrmaschine gemäß einem der Ansprüche 1-8 und einen Bearbeitungs-Kopf (30), der gestaltet ist, um an den Schlitten (130) gekoppelt zu werden.

11. Das Bearbeitungssystem gemäß Anspruch 10, wobei jener Kopf (30) ein Plandrehkopf ist.

12. Das Bearbeitungssystem gemäß einem der Ansprüche 10 und 11, wobei jener Kopf ein Gewicht hat, das 2500 kg übersteigt.

13. Ein Verfahren zur Koppelung eines Kopfes einer Bohrmaschine gemäß einem der Anspruche 1-8, dadurch charakterisiert, dass der Kopf (30) an den Schlitten (130) gekoppelt wird.

14. Das Verfahren gemäß Anspruch 13, wobei der Kopf (30) an jenen Schlitten (130) gekoppelt ist, unter Verwendung mechanischer Kopplungs-Mittel, die mindestens ein Kopplungs-Element (131) umfassen, das gestaltet ist, um selektiv einen ersten Zustand und einen zweiten Zustand anzunehmen, sodass, falls ein Kopf an den Schlitten gekoppelt ist, wenn das Kopplungs-Element in jenem zweiten Zustand ist, das Kopplungs-Element das Entfernen des Kopfs von dem Schlitten verhindert, und wenn das Kopplungs-Element in jenen ersten Zustand ist, es das Entfernen des Kopfes von dem Schlitten nicht verhindert.

15. Das Verfahren gemäß Anspruch 14, wobei jenes Kopplungs-Element (131) hydraulisch gesteuert wird, um von jenem ersten Zustand in jenen zweiten Zustand überzugehen, und umgekehrt.

## Revendications

1. Aléseuse comprenant une structure (11) mobile suivant la direction horizontale selon un premier axe horizontal (X), un chariot (130) monté sur ladite structure (11) et qui est mobile verticalement selon un axe vertical (Y), un bélier (14) monté dans ledit chariot (130) et mobile par rapport audit chariot (130) selon un second axe horizontal (Z) perpendiculaire audit premier axe horizontal (X) et une barre (15) montée de manière rotative dans ledit bélier (14)
**caractérisée en ce que**
le chariot (130) est équipé de moyens de couplage pour coupler une tête au chariot (130), lesdits moyens de couplage comprenant des moyens de couplage mécaniques comprenant au moins un élément de couplage (131) configuré pour adopter de manière sélective un premier état et un second état, de sorte que si une tête est couplée au chariot quand l'élément de couplage se trouve dans ledit second état, l'élément de couplage empêche le retrait de la tête du chariot et quand l'élément de couplage se trouve dans ledit premier état, celui-ci n'empêche pas le retrait de la tête du chariot.

2. Aléseuse selon la revendication 1, dans laquelle ledit élément de couplage (131) est actionné de manière hydraulique pour passer dudit premier état audit second état et vice-versa.

3. Aléseuse selon l'une quelconque des revendications 1 et 2, dans laquelle le chariot (130) comprend au moins quatre desdits éléments de couplage (131).

4. Aléseuse selon l'une quelconque des revendications précédentes, dans laquelle le chariot comprend des moyens de centrage (132) configurés pour interagir avec la tête pour le positionnement correct de la tête par rapport au chariot quand la tête est couplée au chariot.

5. Aléseuse selon l'une quelconque des revendications précédentes, dans laquelle lesdits moyens de couplage comprennent au moins une connexion hydraulique (132) pour faciliter une transmission de liquide entre le chariot (130) et la tête.

6. Aléseuse selon l'une quelconque des revendications précédentes, dans laquelle lesdits moyens de couplage comprennent au moins une connexion électrique (134) pour la transmission d'une puissance électrique et/ou de signaux électriques entre le chariot (130) et la tête.

7. Aléseuse selon l'une quelconque des revendications précédentes, dans laquelle lesdits moyens de couplage ne sont pas situés dans le bélier.

8. Aléseuse selon l'une quelconque des revendications précédentes, dans laquelle lesdits moyens de couplage sont situés dans une paroi du chariot (130), qui comprend un trou à travers lequel le bélier sort du chariot (130).

9. Système d'usinage comprenant une aléseuse selon l'une quelconque des revendications précédentes et un chariot (21) pour charioter une partie à usiner, ledit chariot (21) étant mobile horizontalement selon ledit second axe horizontal (Z).

10. Système d'usinage comprenant une aléseuse selon l'une quelconque des revendications 1 à 8 et une tête d'usinage (30) configurée pour être couplée au chariot (130).

11. Système d'usinage selon la revendication 10, ladite tête (30) étant une tête à surfacer.

12. Système d'usinage selon l'une quelconque des revendications 10 et 11, ladite tête ayant un poids supérieur à 2500 kg.

13. Méthode pour coupler une tête à une aléseuse selon l'une quelconque des revendications 1 à 8, **caractérisée en ce que** la tête (30) est couplée au chariot (130).

14. Méthode selon la revendication 13, dans laquelle la tête (30) est couplée au chariot (130) en utilisant des moyens de couplage mécaniques comprenant au moins un élément de couplage (131) configuré pour adopter de manière sélective un premier état et un second état, de sorte que si une tête est couplée au chariot quand l'élément de couplage se trouve dans ledit second état, l'élément de couplage empêche le retrait de la tête du chariot et quand l'élément de couplage se trouve dans ledit premier état, celui-ci n'empêche pas le retrait de la tête du chariot.

15. Méthode selon la revendication 14, dans laquelle ledit élément de couplage (131) est actionné de manière hydraulique pour passer dudit premier état audit second état et vice-versa.
